# FASCICULE DE BREVET EUROPEEN

(11) **EP 3 100 035 B1**
(45) Date de publication et mention de la délivrance du brevet: **22.09.2021**
(21) Numéro de dépôt: 15700766.7
(22) Date de dépôt: 23.01.2015
(51) Int. Cl.: G01N 23/2251, G01N 23/2255, G01N 21/47, G06T 7/40, G06T 7/174, G06T 7/70, G06T 7/73, G06T 7/00

(54) **PROCEDE DE CARTOGRAPHIE DES ORIENTATIONS CRISTALLINES D'UN ECHANTILLON EN MATERIAU POLYCRISTALLIN**
VERFAHREN ZUM KRISTALLORIENTIERUNGSMAPPING EINER PROBE AUS EINEM POLYKRISTALLINEN MATERIALS
METHOD FOR MAPPING CRYSTAL ORIENTATIONS IN A SAMPLE MADE OF A POLYCRYSTALLINE MATERIAL

(30) Priorité: 28.01.2014 FR 1400207
(43) Date de publication de la demande: 07.12.2016
(73) Titulaire: Institut National des Sciences Appliquées de Lyon, 69100 Villeurbanne (FR); Centre National de la Recherche Scientifique (C.N.R.S.), 75016 Paris (FR); Université Claude Bernard Lyon 1, 69100 Villeurbanne (FR)
(72) Inventeur: LANGLOIS, Cyril, F-69003 Lyon (FR)
(74) Mandataire: Be IP
(86) Numéro de dépôt international: PCT/EP2015/051313
(87) Numéro de publication internationale: WO 2015/113898

(56) Documents cités:
- FR-A1- 2 988 841
- VASILISA VELIGURA ET AL: "Channeling in helium ion microscopy: Mapping of crystal orientation", BEILSTEIN JOURNAL OF NANOTECHNOLOGY, vol. 3, 10 juillet 2012 (2012-07-10), pages 501-506, XP055176507, DOI: 10.3762/bjnano.3.57
- UCHIC M D ET AL: "3D microstructural characterization of nickel superalloys via serial-sectioning using a dual beam FIB-SEM", SCRIPTA MATERIALIA, ELSEVIER, AMSTERDAM, NL, vol. 55, no. 1, 1 juillet 2006 (2006-07-01), pages 23-28, XP027890510, ISSN: 1359-6462 [extrait le 2006-07-01]
- SEIICHI SUZUKI: "Features of Transmission EBSD and its Application", JOM, vol. 65, no. 9, 27 juillet 2013 (2013-07-27), pages 1254-1263, XP055124905, ISSN: 1047-4838, DOI: 10.1007/s11837-013-0700-6
- JUN KAMEDA ET AL: "Morphological analyses of minute crystals by using stereo-photogrammetric scanning electron microscopy and electron back-scattered diffraction", JOURNAL OF MICROSCOPY, vol. 228, no. 3, 1 décembre 2007 (2007-12-01), pages 358-365, XP055127080, ISSN: 0022-2720, DOI: 10.1111/j.1365-2818.2007.01854.x
- DAVID J DINGLEY: "Orientation Imaging Microscopy for the Transmission Electron Microscope", MICROCHIMICA ACTA ; AN INTERNATIONAL JOURNAL ON MICRO AND TRACEANALYSIS, SPRINGER-VERLAG, VI, vol. 155, no. 1-2, 6 June 2006 (2006-06-06), pages 19-29, XP019430177, ISSN: 1436-5073, DOI: 10.1007/S00604-006-0502-4

## Description

### DOMAINE TECHNIQUE

La présente invention concerne le domaine technique général de la caractérisation d'un échantillon en matériau polycristallin. Ces matériaux sont par exemple des céramiques, des métaux, etc.

Un matériau polycristallin est un matériau solide constitué d'une pluralité de petits cristaux - appelés « grains » - de tailles et d'orientations cristallines variées, par opposition à un matériau monocristallin constitué d'un seul et unique cristal et un matériau amorphe sans ordre à longue distance.

La plupart des matériaux (dans le domaine de la microélectronique, des nouvelles énergies, des alliages, des céramiques, des minéraux) se composent de cristaux de taille, de forme et de structure différentes.

L'anisotropie des matériaux polycristallins a de multiples impacts sur leurs caractéristiques, notamment sur leurs propriétés mécaniques (résistance à la fissuration, à la rupture, etc.) ou encore sur leurs propriétés électriques.

La connaissance de l'orientation cristalline des grains composant un matériau polycristallin est donc très importante.

### PRESENTATION DE L'ART ANTERIEUR

Actuellement, une technique dite de diffraction d'électrons rétrodiffusés (ou *« EBSD »* selon le sigle associé à l'expression anglo-saxonne « *electron backscatter diffraction* ») est utilisée pour caractériser des cristaux.

Notamment, l'EBSD est une technique cristallographique microstructurale permettant de mesurer l'orientation cristallographique de nombreux matériaux monocristallin ou polycristallin. L'EBSD peut être utilisée pour indexer et identifier des phases cristallines appartenant aux sept systèmes cristallins, à savoir les systèmes cristallins :
- triclinique,
- monoclinique,
- orthorhombique,
- tétragonal,
- trigonal,
- hexagonal, et
- cubique.

L'EBSD est réalisée avec un microscope électronique à balayage (« *MEB* ») équipé d'un détecteur EBSD comportant au moins un écran phosphorescent, un objectif compact et une caméra CCD à faible lumière.

Pour effectuer une mesure EBSD, un échantillon polycristallin est placé dans une chambre du MEB, avec un angle important (-70° par rapport à l'horizontale) vers la caméra de diffraction, pour augmenter le contraste du cliché d'électrons rétrodiffusés.

L'écran phosphorescent est situé à l'intérieur de la chambre d'examen du MEB à un angle d'environ 90° de l'axe du faisceau et est couplé à un objectif compact qui focalise l'image produite sur l'écran phosphorescent vers la caméra CCD.

Dans cette configuration, certains des électrons qui atteignent l'échantillon rétrodiffusent et diffractent sur les plans cristallins de l'échantillon selon la condition de Bragg reliée à l'espacement des plans périodiques du réseau atomique de la structure avant de s'échapper. Certains de ces électrons diffractés percutent et excitent l'écran phosphorescent, provoquant sa fluorescence.

Un diagramme de diffraction d'électrons rétrodiffusés (en anglais : « electron backscatter diffraction pattern », ou « EBSP ») se forme lorsque plusieurs plans différents diffractent les électrons pour former des lignes de Kikuchi (ou bandes de Kikuchi) qui correspondent à chacun des plans de diffraction du réseau.

Si la géométrie du système est bien décrite, il est possible de relier les bandes présentes dans le diagramme EBSP à la phase et à l'orientation cristalline du matériau situé à l'intérieur du volume d'interaction électronique.

Pour ce faire, l'image acquise est traitée à l'aide d'un algorithme permettant de caractériser l'orientation de chaque grain.

Un inconvénient de la technique précitée est qu'elle nécessite l'installation de l'ensemble composé de l'écran phosphorescent, de l'objectif et de la caméra CCD à l'intérieur de la chambre du MEB, ce qui augmente le coût de celui-ci.

Un autre inconvénient concerne le temps d'acquisition de l'image qui peut être très important (i.e. plusieurs heures) en fonction de la qualité de l'image souhaitée. En effet, plus la résolution spatiale de l'image est importante, plus la durée d'acquisition de l'image est importante.

Un autre inconvénient de cette technique est que le faisceau d'électrons émis vers l'échantillon doit présenter un angle de l'ordre de 70° par rapport à la normale à la surface de l'échantillon pour l'obtention de lignes de Kikuchi. Une telle inclinaison du faisceau d'électrons par rapport à la normale à la surface de l'échantillon induit une diminution de la résolution spatiale de l'image, ce qui réduit la précision dans la détermination de l'orientation cristallographique.

Pour pallier ces inconvénients, le document FR 2 988 841 propose l'utilisation d'un faisceau lumineux. Selon FR 2 988 841, ceci permet de s'affranchir de l'utilisation d'un microscope électronique à balayage (cf. page 2 lignes 13-25 de FR 2 988 841), et plus généralement des dispositifs d'acquisition à partir d'un faisceau de particules chargées).

Selon FR 2 988 841, l'utilisation d'un faisceau lumineux permet d'aboutir à un procédé de cartographie des orientations cristallines des grains d'un échantillon compatible avec les contraintes d'une fabrication industrielle (cf. page 3 lignes 21-23).

Plus précisément, FR 2 988 841 enseigne à l'homme du métier que l'utilisation d'un faisceau lumineux permet d'obtenir un procédé de cartographie simple, rapide et peu coûteux à mettre en oeuvre. Pour pouvoir mettre en oeuvre le procédé décrit dans FR 2 988 841, la surface de l'échantillon analysé doit être rugueuse (cf. page 1 lignes 3-9), contrairement aux procédés utilisant un faisceau de particules chargées qui fonctionnement lorsque la surface de l'échantillon analysé est polie.

On entend dans le cadre de la présente invention par « face polie », une surface ayant subi une gamme de polissage typiquement jusqu'à un grain de 3 µm (suspension diamantée par exemple) ou plus préférentiellement un polissage vibratoire par suspension de silice colloïdale).

Toutefois, un tel procédé présente de nombreux inconvénients. Notamment, la résolution spatiale des images acquises à l'aide d'un dispositif d'acquisition utilisant un faisceau lumineux n'est pas suffisante pour permettre la détection de variation d'orientation à l'intérieur d'un grain. En effet dans FR 2 988 841, la résolution spatiale la plus petite est égale à la moitié de la longueur d'onde du faisceau lumineux. En d'autres termes, il n'est pas possible avec le procédé décrit dans FR 2 988 841 de distinguer une différence d'orientation cristallographique entre deux points séparés d'une distance inférieure à la moitié de la longueur d'onde.

D'ailleurs, FR 2 988 841 ne permet pas de mesurer des intensités pour deux points d'un même grain, mais uniquement d'estimer une intensité moyenne pour tous les points d'un même grain.

Le document Vasilia Veligura et al: "Channeling in helium ion microscopy: Mapping of crystal orientation",Belstein Journal of Nanotechnology, vol. 3, 10 juillet 2012, pages 501-506 décrit une méthode expérimentale pour obtenir des informations sur la cartographie des orientations cristallines d'un échantillon de film d'or {111} poly-cristallin. Cette méthode permet la détermination de l'orientation cristalline de grains constituant l'échantillon polycristallin en utilisant un microscope à ions hélium où des images d'électrons secondaires de l'échantillon sont acquises à différent angles d'inclinaison de l'échantillon.

Le document Uchic M D et al: "3D microstructural characterization of nickel superalloys via serial-sectioning using a dual beam FIB-SEM", Scripta Materialia, vol. 55, 1 juillet 2006, pages 23-28 décrit une méthode de caractérisation de la structure de grain d'un superalliage à base de Nikel.

Le document David J Dingley: "Orientation Imaging Microscopy for the Transmission Electron Microscope", Microchimica Acta, vol. 155, 6 juin 2006, pages 19-29 décrit une méthode expérimentale pour obtenir une cartographie d'orientations cristallines d'un échantillon polycristallin où une série d'images de l'échantillon acquises à différent angles d'incidence d'un faisceau d'électrons est utilisée pour reconstruire un diagramme de diffraction des électrons de l'échantillon.

Un but de la présente invention est de proposer un procédé de cartographie des orientations cristallines d'un échantillon en matériau polycristallin à partir d'images acquises en utilisant un dispositif d'acquisition émettant un faisceau de particules chargées (ions ou électrons), et permettant de pallier au moins l'un des inconvénients précités en référence à la technique EBSD. Plus précisément, un but de la présente invention est de proposer un procédé simple, rapide et peu coûteux pour la cartographie des orientations cristallines d'un échantillon en matériau polycristallin à partir d'images acquises en utilisant un dispositif d'acquisition émettant un faisceau de particules chargées.

### RESUME DE L'INVENTION

A cet effet, l'invention propose un procédé de cartographie des orientations cristallines d'un échantillon incluant une surface polie, le procédé comprenant :
- la réception d'une série d'images de l'échantillon acquises par un dispositif d'acquisition, les images étant acquises pour des géométries d'éclairage de l'échantillon différentes, chaque image incluant des pixels représentant des intensités de points de l'échantillon pour une géométrie d'éclairage respective,
- l'estimation d'au moins un profil d'intensité pour au moins un point considéré du matériau à partir de la série d'images, chaque profil d'intensité représentant l'intensité associée au point considéré en fonction de la géométrie d'éclairage pour chaque image de la série
- la détermination d'une orientation cristalline pour chaque point considéré du matériau en comparant le profil d'intensité associé audit point considéré à des signatures théoriques de profils d'intensité d'orientations cristallines connues contenus dans une base de données.

On entend dans le cadre de la présente invention par « face polie », une surface ayant subi une gamme de polissage typiquement jusqu'à un grain de 3 µm (suspension diamantée par exemple) ou plus préférentiellement un polissage vibratoire par suspension de silice colloïdale).

Des aspects préférés mais non limitatifs du procédé selon l'invention sont les suivants :
- l'étape d'estimation comprend pour chaque point considéré du matériau, le groupement de pixels homologues représentant ledit point considéré dans les images de la série d'images, et la génération d'un graphique représentant l'intensité du point considéré en fonction de la géométrie d'éclairage ;
- les images de la série d'images sont acquises :
   ∘ pour un angle d'inclinaison constant entre la normale à la surface de l'échantillon et l'axe du faisceau de particules chargées, et
   ∘ pour des angles de rotation différents autour de la normal à la surface de l'échantillon ;
- le procédé comprend en outre une étape de correction de l'angle d'inclinaison constant et une étape de redressement des images de la série d'images, ladite étape de redressement consistant à tourner les images de la série d'images obtenues pour un angle de rotation non nul de manière à les faire correspondre à une image obtenue pour un angle d'inclinaison nul ;
- l'angle de rotation entre deux images successives de la série d'images varie d'un pas compris entre 1° et 15° ;
   le fait d'augmenter le pas permet de diminuer le temps d'acquisition puisque le nombre d'images de la série d'images est diminué ;
- l'angle de rotation (β0- β4) varie sur une dynamique supérieure ou égale à 180°, préférentiellement supérieure ou égale à 270° et encore plus préférentiellement égale à 360° ;
   on entend, par « dynamique », la différence entre l'angle de rotation d'une image initiale et l'angle de rotation d'une image finale de la série d'images ;
   plus la dynamique est importante, plus les risques d'erreur dans la détermination d'une orientation cristalline sont faibles ;
   en effet, pour une dynamique égale à 180°, le profil d'intensité d'un point de l'échantillon peut correspondre à plusieurs signatures théoriques ;
   le fait d'utiliser une dynamique supérieure ou égale à 270° et encore plus préférentiellement égale à 360° permet de lever les ambiguïtés relatives aux signatures théoriques associables à un profil d'intensité donné ;
- les images de la série d'images sont acquises pour des angles d'inclinaison différents entre la surface de l'échantillon et un plan perpendiculaire à l'axe d'un faisceau de particules chargées (i.e. ions ou électrons) émis par le dispositif d'acquisition ;
- l'angle d'inclinaison de chaque image de la série d'images est compris entre -60° et +60° ;
- l'angle d'inclinaison entre deux images successives de la série d'images varie d'un pas compris entre 1° et 10° ;
- le procédé comprend en outre une étape de déformations des images de la série d'images, ladite étape de déformation consistant à étirer les images de la série d'images obtenues pour un angle d'inclinaison non nul de sorte à les faire correspondre à une image obtenue pour un angle d'inclinaison nul ;
- le procédé comprend en outre l'acquisition, dans un dispositif d'acquisition tel qu'une sonde ionique focalisée, d'une série d'images d'un matériau polycristallin pour des
   angles d'inclinaison différents entre la surface du matériau et un plan perpendiculaire à l'axe du faisceau de particules chargées, chaque image incluant des pixels représentant des intensités de points du matériau pour un angle d'inclinaison respectif ;
- le procédé comprend en outre les étapes suivantes :
   ∘ calcule d'une image intermédiaire de contours pour une partie et encore plus préférentiellement toutes les images de la série d'images, une première valeur étant assignée aux pixels de l'image de la série d'images pour obtenir une image de contour,
   ∘ superposition des images intermédiaires de contours pour former une image finale de contours.

L'invention concerne également un produit programme d'ordinateur comprenant des instructions de code de programmation destinées à exécuter les étapes du procédé décrit ci-dessus lorsque ledit programme est exécuté sur un ordinateur.

### BREVE DESCRIPTION DES FIGURES

D'autres caractéristiques, buts et avantages de la présente invention ressortiront encore de la description qui suit, laquelle est purement illustrative et non limitative et doit être lue en regard des dessins annexés sur lesquels :
- la figure 1 illustre un exemple de procédé de cartographie des orientations cristallines d'un échantillon en matériau polycristallin,
- la figure 2 illustre un premier mode d'acquisition d'images de l'échantillon en matériau polycristallin selon différents angles d'inclinaison,
- la figure 3 illustre un deuxième mode d'acquisition d'images de l'échantillon en matériau polycristallin selon différents angles de rotation,
- la figure 4 illustre un exemple de profil d'intensité représentant l'intensité d'un point du matériau polycristallin en fonction de l'angle utilisé pour l'acquisition.

### DESCRIPTION DETAILLE

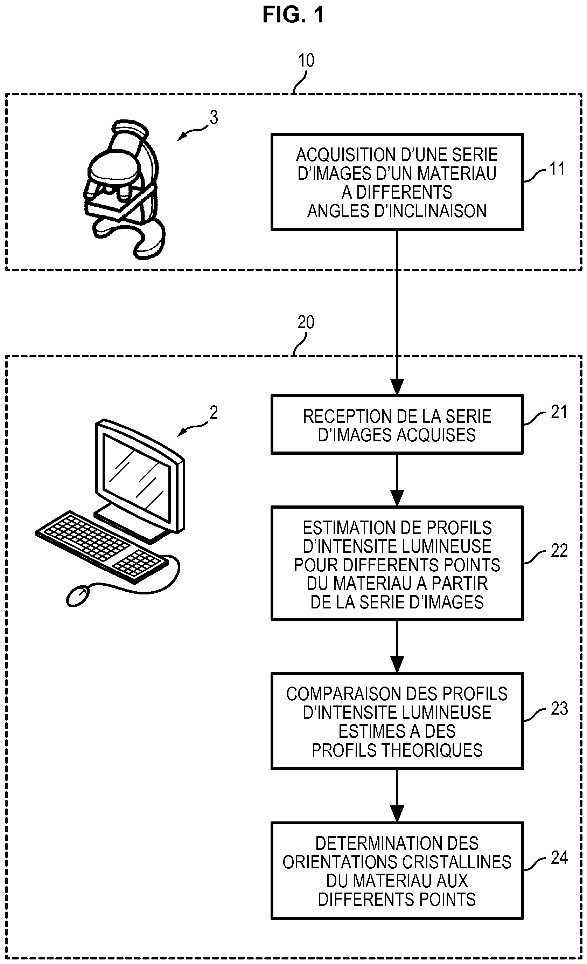

On va maintenant décrire plus en détail un procédé de cartographie des orientations cristallines d'un échantillon de matériau polycristallin en référence aux figures 1 à 4.

Ce procédé peut être mis en oeuvre pour déterminer l'orientation cristalline de chaque grain 41-46 d'un échantillon en matériau polycristallin. Le matériau polycristallin peut être un métal, une céramique ou tout autre matériau polycristallin pour lequel on souhaite cartographier les orientations cristallines.

Dans une première phase 10 du procédé, plusieurs images de l'échantillon de matériau polycristallin sont acquises.

Dans une deuxième phase 20 du procédé, les images acquises sont traitées pour déterminer les orientations cristallines des grains 41-46 de l'échantillon en matériau polycristallin.

Il est connu que l'intensité d'un cristal illuminé sous éclairage directionnel dépend de son orientation cristalline par rapport à la direction du faisceau utilisé. Dans le cas d'un matériau polycristallin, l'intensité de chaque grain 41-46 varie donc en fonction de son orientation cristalline par rapport à la direction du faisceau utilisé.

Le procédé décrit dans la suite se base sur ce phénomène connu pour déterminer les orientations cristallines des différents grains 41-46 composant l'échantillon en matériau polycristallin.

### Phase d'acquisition

La première phase comprend l'acquisition d'une série d'images 4a-4e de l'échantillon de matériau polycristallin. La phase d'acquisition est mise en œuvre dans un dispositif d'acquisition adapté pour émettre un faisceau de particules chargées (ions ou électrons) à partir d'une source et pour collecter les particules réémises par l'échantillon sur un détecteur.

Le dispositif d'acquisition peut être un microscope électronique à balayage 3 connu de l'homme du métier et qui sera décrit brièvement dans la suite.

Un microscope électronique à balayage fonctionne en générant à partir d'une source, un faisceau primaire d'électrons de balayage qui percute un échantillon dont une surface est reproduite sous forme d'image.

En conséquence, des électrons secondaires et rétrodiffusés sont émis par la surface de l'échantillon et leurs trajectoires respectives suivent en sens inverse la direction originale du faisceau, qui est perpendiculaire à la surface de l'échantillon (connue sous le nom de direction axiale) et avec des angles divergeant par rapport à celle-ci.

Les électrons émis sont collectés par un détecteur, placé au-dessus de l'échantillon. Le détecteur génère un signal à partir de l'émission d'électrons collectés sur la surface de l'échantillon lorsqu'elle est exposée au faisceau d'électrons.

Le signal provenant du détecteur est typiquement traité pour créer une image de la surface de l'échantillon.

En variante, le dispositif d'acquisition peut être une sonde ionique focalisée. Le principe de fonctionnement d'une sonde ionique focalisée (ou « FIB » selon l'acronyme anglo-saxon de l'expression « *Focused ion beam* ») est similaire à celui d'un microscope électronique à balayage (MEB).

La sonde ionique focalisée diffère toutefois du microscope électronique à balayage en ce qu'elle utilise un faisceau d'ions focalisés, généralement du gallium, pour illuminer l'échantillon.

L'utilisation d'une sonde ionique focalisée permet d'augmenter le phénomène de variation d'intensité entre les différents grains 41-46 de l'échantillon de matériau polycristallin.

Quel que soit le dispositif d'acquisition utilisé, celui-ci permet d'acquérir une série d'images 4a-4e de l'échantillon.

Avantageusement, les images 4a-4e de l'échantillon sont acquises pour différentes géométries d'éclairage. Plus précisément et en considérant un grain donné de l'échantillon polycristallin, chaque image est acquise pour une orientation différente du faisceau par rapport à la maille cristalline de ce grain.

Pour un grain considéré, l'intensité reçue par le détecteur dépendant de son orientation cristalline par rapport au faisceau, l'intensité de ce grain dans les différentes images de la série d'images est différentes.

Deux modes d'acquisition différents permettent d'obtenir des séries d'images utilisables pour la détermination des orientations cristallines des grains de la zone observée.

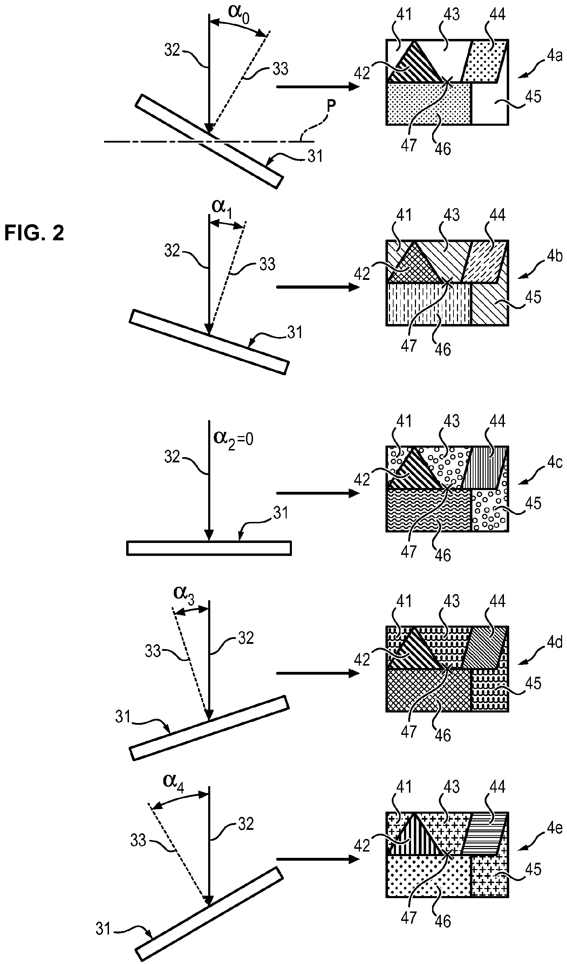

### Mode d'acquisition n°1 - figure 2

On a illustré à la figure 2 un premier mode d'acquisition dans lequel les images de la série d'images sont acquises en faisant varier un angle d'inclinaison.

On entend, dans le cadre de la présente invention, par « *angle d'inclinaison »,* l'angle *« α* » entre la surface 31 du matériau et un plan P perpendiculaire à l'axe du faisceau de particules chargées 32. Ainsi, l'angle α correspond à l'angle entre la normal 33 à la surface 31 du matériau et l'axe du faisceau de particules chargées 32.

Pour faire varier la géométrie d'éclairage entre le faisceau de particules chargées et les différents grains composant la zone à analyser, l'échantillon peut être déplacé en rotation autour d'un axe de pivotement perpendiculaire à l'axe du faisceau de particules chargées 32, et donc contenu dans le plan P. On fait ainsi varier l'angle d'inclinaison lors de l'acquisition d'images successives.

Avantageusement, l'angle d'inclinaison α peut varier dans une gamme comprise entre -60° et +60°. Ceci permet de disposer d'une gamme angulaire suffisante pour déterminer l'orientation cristalline des différents grains 41-46 du matériau lors de la deuxième phase 20.

En fonction de l'application visée et des besoins de l'utilisateur, l'angle d'inclinaison peut être modifié d'un pas compris entre le pas minimum permis par le contrôle de la platine goniométrique utilisée (par exemple 0,001°, ou typiquement 1° dans un MEB) et typiquement plusieurs degrés, entre deux acquisitions successives.

Le principe de fonctionnement du dispositif d'acquisition est le suivant. L'échantillon est fixé à un support mobile en rotation autour de l'axe de pivotement perpendiculaire à l'axe du faisceau de particules chargées 32. Le support est déplacé en rotation jusqu'à une première position extrême (par exemple α0 = -60°). Une première image est acquise. Le support est ensuite déplacé en rotation d'un angle correspondant au pas angulaire choisi, ce qui induit le déplacement en rotation de l'échantillon. Une deuxième image de l'échantillon est acquise. Les étapes de déplacement et d'acquisition sont ensuite réitérées jusqu'à une deuxième position extrême (par exemple α4 = +60°).

On obtient ainsi une série de :
- 120 images pour un angle d'inclinaison variant entre -60° et 60° dans le cas d'un pas de 1°, ou de
- 60 images pour un angle d'inclinaison variant entre -60° et 60° dans le cas d'un pas de 2° ou un angle d'inclinaison variant entre -30° et 30° dans le cas d'un pas de 1°.

La série d'images est ensuite transmise à un dispositif de traitement pour la mise en oeuvre de la deuxième phase du procédé.

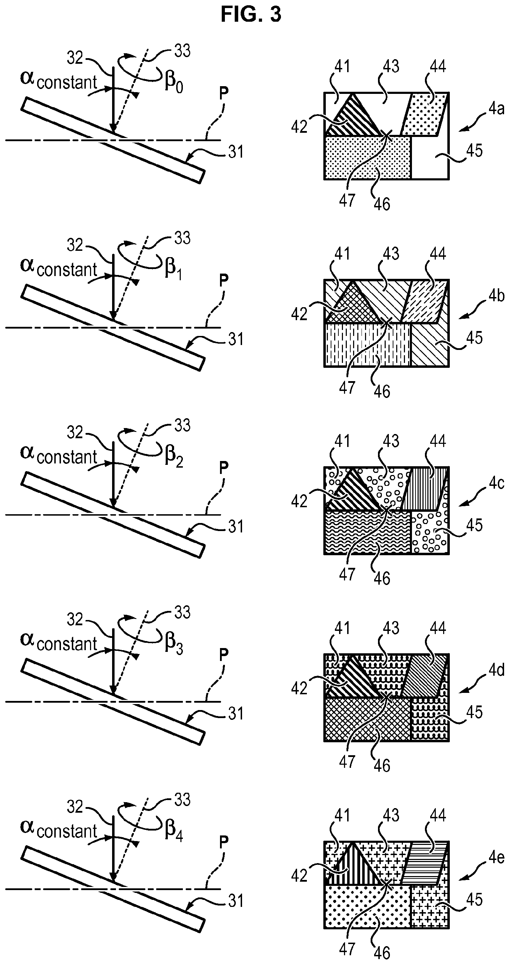

### Mode d'acquisition n°2- figure 3

On a illustré à la figure 3 un deuxième mode d'acquisition dans lequel les images de la série d'images sont acquises en faisant varier un angle de rotation.

On entend, dans le cadre de la présente invention et pour ce deuxième mode d'acquisition, par « *angle de rotation »,* l'angle « β » de rotation autour de la normal 33 à la surface 31 du matériau. L'angle d'inclinaison *α_{constant},* défini comme étant l'angle entre la surface et le faisceau de particules chargées, est avantageusement fixé autour de 40° pour optimiser l'acquisition des images.

Bien entendu, l'homme du métier aura compris qu'une autre valeur d'angle d'inclinaison non nulle peut être utilisée, par exemple une valeur comprise entre [-80, 0[ et ]0, +80°].

Pour faire varier la géométrie d'éclairage entre le faisceau de particules chargées et les différents grains composant la zone à analyser, lors de l'acquisition d'images successives, l'échantillon peut être déplacé en rotation autour de la normal 33 à la surface 31 du matériau. On fait ainsi varier l'angle de rotation β lors de l'acquisition d'images successives.

Avantageusement, l'angle de rotation peut couvrir 360°, soit un tour complet. En fonction de l'application visée et des besoins de l'utilisateur, l'angle de rotation peut être modifié d'un pas compris entre le pas minimum permis par le contrôle de la platine goniométrique utilisée (par exemple 0,001°, ou typiquement 1° dans un MEB) et typiquement plusieurs degrés, entre deux acquisitions successives.

Le principe de fonctionnement du dispositif d'acquisition est le suivant. L'échantillon est fixé à un support mobile en rotation autour de l'axe de pivotement perpendiculaire à la normal 33 à la surface 31 du matériau. Le support est déplacé en rotation jusqu'à une position initiale (par exemple β₀ = 0°). Une première image est acquise. Le support est ensuite déplacé en rotation d'un angle correspondant au pas angulaire choisi, ce qui induit le déplacement en rotation de l'échantillon. Une deuxième image de l'échantillon est acquise. Les étapes de déplacement et d'acquisition sont ensuite réitérées jusqu'à une position finale (par exemple βₙ = 360°).

Pour un tour complet (i.e. angle de rotation variant de 0 à 360°), on obtient une série de 180 images pour un pas de 2° ou 360 images pour un pas de 1° par exemple.

La série d'images est ensuite transmise à un dispositif de traitement pour la mise en oeuvre de la deuxième phase du procédé.

De plus, l'angle d'émission des électrons à partir de la surface de l'échantillon vers le détecteur étant invariant au cours de l'acquisition de la série d'images, l'intensité moyenne d'une image est égale dans les différentes images de la série.

Ceci permet de s'affranchir d'une étape d'harmonisation de l'intensité moyenne dans les différentes images pouvant être implémentée dans le cas d'une acquisition selon le premier mode d'acquisition.

En effet, dans le premier mode d'acquisition, la variation de l'angle d'inclinaison implique une variation de l'angle d'émission des électrons à partir de la surface de l'échantillon vers le détecteur (et donc de l'intensité moyenne dans les différentes images de la série).

### Phase de traitement

Le dispositif de traitement 2 permet de cartographier l'orientation cristalline de l'échantillon de matériau.

Le dispositif de traitement 2 peut comprendre un calculateur permettant notamment d'estimer des profils d'intensité comme il sera décrit plus en détail dans la suite.

Le calculateur est par exemple un/des ordinateur(s), un/des processeur(s), un/des microcontrôleur(s), un/des micro-ordinateur(s), un/des automate(s) programmable(s), un/des circuit(s) intégré(s) spécifique(s) d'application, d'autres circuits programmables, ou d'autres dispositifs qui incluent un ordinateur tels qu'une station de travail.

Le dispositif de traitement 2 peut être intégrée au dispositif d'acquisition 3, ou être séparée du dispositif d'acquisition 3.

Le calculateur est couplée à une (ou plusieurs) mémoire(s) qui peut être intégrée au ou séparée du calculateur. La mémoire peut être une mémoire ROM/RAM, une clé USB, une mémoire d'un serveur central. Cette mémoire peut permettre de stocker des instructions de code de programmation destinées à exécuter les étapes de la phase de traitement 20, ou d'autres données utilisées par le calculateur.

Dans une première étape, le dispositif de traitement 2 reçoit les images 4a-4e de la série d'images acquises par le dispositif d'acquisition 3. Chaque image acquise 4a-4e est composée de pixels dont les niveaux de gris - compris entre 0 et 255 ou davantage si les images acquises sont codées avec un nombre de bits supérieur (par exemple 16 ou 32 bits)- sont représentatifs d'intensités électroniques reçues par le détecteur.

Plus précisément, le niveau de gris de chaque pixel est représentatif de l'intensité d'un point correspondant de l'échantillon. Cette intensité dépend de l'orientation cristalline au point considéré et de l'angle qui définit la géométrie d'acquisition (i.e. positions de la source et du détecteur par rapport à l'échantillon).

Les images 4a-4e de la série d'images comprennent des pixels homologues correspondants à un même point 47 de l'échantillon de matériau polycristallin.

Le niveau de gris des pixels homologues varie entre deux images successivement acquises puisque la géométrie d'acquisition (i.e. angle d'inclinaison α) varie lors de l'acquisition de ces images successives.

Ainsi, l'intensité d'un même point 47 de l'échantillon - et donc plus généralement d'un même grain 41-46 - varie dans les images 4a-4e de la série d'images, comme illustré à la figure 2.

Pour le mode d'acquisition 1, les images étant obtenues pour différents angles d'inclinaison, celles-ci sont déformées les unes par rapport aux autres. C'est pourquoi le procédé peut comprendre une étape de déformation des images de la série d'images, ladite étape de déformation consistant à étirer les images de la série d'images obtenues pour un angle d'inclinaison non nul de sorte à les faire correspondre à une image obtenue pour un angle d'inclinaison nul.

Pour le mode d'acquisition 2, il est nécessaire de corriger également l'inclinaison de l'échantillon, comme pour les images issues du mode d'acquisition 1. Toutefois, cet angle d'inclinaison est le même pour toutes les images. Ensuite, les images étant obtenues pour différents angles de rotation de l'échantillon, le procédé peut toutefois comprendre une étape de redressement des images de la série d'images, ladite étape de redressement consistant à faire pivoter les images de la série d'images obtenues pour un angle de rotation non nul de manière à les faire correspondre à une image obtenue pour un angle de rotation nul.

Dans une autre étape 22 du procédé, une estimation de profils d'intensité est effectuée.

Pour chaque point de l'échantillon, les pixels homologues des différentes images sont regroupés. La valeur de chaque pixel homologue - qui représente une intensité - est reportée dans un graphique en fonction de l'angle utilisé pour acquérir l'image à laquelle appartient le point homologue.

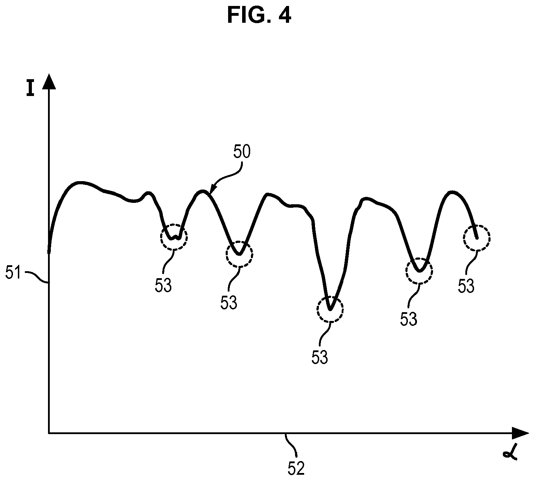

Un exemple de profil d'intensité 50 estimé pour un point d'un échantillon est illustré à la figure 4. Ce profil d'intensité 50 représente l'intensité 51 du point de l'échantillon en fonction de l'angle 52. On constate que l'intensité 51 varie en fonction de l'angle 52. Notamment le profil d'intensité comprend quatre creux 53 correspondant à des chutes d'intensité. En dehors de ces quatre creux 53, l'intensité du point de l'échantillon reste sensiblement constante quel que soit l'angle.

Au lieu d'estimer un profil d'intensité pour chaque point de l'échantillon, l'étape d'estimation peut être mise en oeuvre sur un, deux, ou trois points de chaque grain 41-46 de l'échantillon. Ceci permet d'accélérer la phase de traitement. Dans ce cas, le procédé comprend une étape de sélection des points de l'échantillon pour lesquels l'étape d'estimation doit être mise en oeuvre. Cette étape de sélection peut être automatique ou manuel (i.e. réalisée par l'utilisateur).

Pour faciliter la mise en oeuvre de l'étape de sélection, le procédé peut comprendre une étape de détection des contours des grains basée sur tout algorithme de détection de contours connu de l'homme du métier.

La détection des contours est avantageusement réalisée sur plusieurs images de la série d'images, de préférence sur toutes les images de la série d'images. En effet, la mise en oeuvre de l'étape de détection de contours sur une image unique de la série d'images peut ne pas suffire pour identifier les contours de tous les grains puisque, dans certains cas, deux grains adjacents peuvent présenter un même niveau de gris dans une image donnée de la série d'images. C'est pourquoi il est préférable de réaliser l'étape de détection des contours sur plusieurs images. A l'issu de l'étape de détection de contours, on obtient une pluralité d'images intermédiaires de contours. Ces images intermédiaires de contours sont ensuite superposées pour former l'image finale de contours des grains de l'échantillon.

A partir de l'image de contours des grains de l'échantillon, un ou plusieurs points sont sélectionnés dans chaque grain et des profils d'intensité sont estimés pour chaque point sélectionné.

Un profil d'intensité peut s'interpréter comme suit. Lorsque l'intensité est constante, alors l'orientation entre le faisceau et le plan cristallin au point considéré est quelconque. Lorsque l'intensité varie, alors le faisceau est quasiment parallèle au plan cristallin au point considéré de l'échantillon.

L'amplitude de la chute d'intensité dépend du type de plan cristallin. Par exemple pour la structure cubique du nitrure de titane (TiN), lorsque le faisceau devient parallèle à un plan [1 1 1], la chute d'intensité est plus faible que lorsque le faisceau devient parallèle à un plan [1 1 0]. De même lorsque le faisceau devient parallèle à un plan [1 1 0], la chute d'intensité est plus faible que lorsque le faisceau devient parallèle à un plan [1 0 0]. Ainsi l'amplitude de la chute d'intensité permet de définir le type de plan cristallin auquel appartient le point de l'échantillon.

Cependant, cette interprétation ne permet pas de déterminer l'orientation cristalline des points de l'échantillon par une méthode de calcul directe. En effet, lors de l'acquisition, si plusieurs plans cristallins [1 1 1] sont par exemple parallèles au faisceau pour un même angle d'inclinaison, deux creux de faible amplitude peuvent induire l'apparition d'un creux de grande amplitude par addition des deux phénomènes, ce qui peut engendrer une erreur dans la caractérisation du plan cristallin au point de l'échantillon.

C'est pourquoi les inventeurs proposent de comparer (étape 23) chaque profil d'intensité à des signatures théoriques de profils d'intensité pour lesquelles l'orientation cristalline est connue. Ces signatures théoriques sont contenues dans une base de données pour les sept systèmes cristallins, à savoir les systèmes cristallins :
- triclinique,
- monoclinique,
- orthorhombique,
- tétragonal,
- trigonal,
- hexagonal, et
- cubique.

Chaque profil d'intensité estimé est donc comparé (étape 23) à des signatures théoriques de profils d'intensité contenues dans la base de données. L'orientation cristalline est déterminée comme étant celle de la signature théorique pour laquelle la corrélation avec le profil d'intensité estimé est maximale.

Les étapes d'estimation et de comparaison sont répétées pour les différents points de l'échantillon. On obtient ainsi une cartographie des orientations cristallines des grains de l'échantillon de matériau polycristallin.

Le lecteur aura compris que de nombreuses modifications peuvent être apportées au procédé décrit ci-dessus sans sortir matériellement des nouveaux enseignements présentés ici.

Par exemple, le procédé peut être utilisé pour déterminer l'orientation cristalline d'un matériau monocristallin.

Il est donc bien évident que les exemples qui viennent d'être donnés ne sont que des illustrations en aucun cas limitatives.

## Revendications

1. Procédé de cartographie des orientations cristallines d'un échantillon (31) incluant une surface polie, le procédé comprenant :
- la réception (21) d'une série d'images (4a-4e) de l'échantillon (31) acquises par un dispositif d'acquisition (3) adapté pour émettre un faisceau de particules chargées sur la surface polie, les images (4a-4e) étant acquises pour des géométries d'éclairage de l'échantillon différentes, chaque image (4a-4e) incluant des pixels représentant des intensités de points de l'échantillon pour une géométrie d'éclairage respective,
- l'estimation (22) d'au moins un profil d'intensité pour au moins un point considéré du matériau à partir de la série d'images, chaque profil d'intensité représentant l'intensité associée au point considéré en fonction de la géométrie **caractérisé en ce que** le procédé comprend aussi : d'éclairage,
- la détermination (24) d'une orientation cristalline pour chaque point considéré du matériau en comparant (23) le profil d'intensité associé audit point considéré à des signatures théoriques de profils d'intensité d'orientations cristallines connues contenus dans une base de données.

2. Procédé selon la revendication 1, dans lequel, l'étape d'estimation comprend pour chaque point considéré du matériau, le groupement de pixels homologues représentant ledit point considéré dans les images de la série d'images, et la génération d'un graphique (50) représentant l'intensité (51) du point considéré en fonction de la géométrie d'éclairage.

3. Procédé selon l'une quelconque des revendications 1 ou 2, dans lequel les images de la série d'images sont acquises :
- pour un angle d'inclinaison constant (α_{constant}) entre la normale (33) à la surface de l'échantillon (31) et l'axe (32) du faisceau de particules chargées, et
- pour des angles de rotation (β0- β4) différents autour de la normal (33) à la surface de l'échantillon (31).

4. Procédé selon la revendication 3, lequel comprend en outre une étape de redressement des images de la série d'images, ladite étape de redressement consistant à tourner les images de la série d'images obtenues pour un angle de rotation non nul de manière à les faire correspondre à une image obtenue pour un angle d'inclinaison nul.

5. Procédé selon l'une des revendications 3 ou 4, dans lequel l'angle de rotation (β0- β4) entre deux images successives de la série d'images varie d'un pas compris entre 1° et 15°.

6. Procédé selon l'une quelconque des revendications 3 à 5, dans lequel l'angle de rotation (β0- β4) varie sur une dynamique supérieure ou égale à 180°, préférentiellement supérieure ou égale à 270° et encore plus préférentiellement égale à 360°, la dynamique correspondant à la différence entre l'angle de rotation d'une image initiale et l'angle de rotation d'une image finale de la série d'images.

7. Procédé selon l'une quelconque des revendications 1 ou 2, dans lequel les images de la série d'images sont acquises pour des angles d'inclinaison (α0- α4) différents entre la surface de l'échantillon (31) et un plan (P) perpendiculaire à l'axe (32) du faisceau de particules chargées émis par le dispositif d'acquisition (3).

8. Procédé selon la revendication 7, dans lequel l'angle d'inclinaison de chaque image de la série d'images est compris entre -60° et +60°.

9. Procédé l'une quelconque des revendications 7 ou 8, dans lequel l'angle d'inclinaison entre deux images successives de la série d'images varie d'un pas compris entre 1° et 10°.

10. Procédé selon l'une quelconque des revendications 7 à 9, lequel comprend en outre une étape de déformations des images de la série d'images, ladite étape de déformation consistant à étirer les images de la série d'images obtenues pour un angle d'inclinaison non nul de sorte à les faire correspondre à une image obtenue pour un angle d'inclinaison nul.

11. Procédé selon l'une quelconque des revendications précédentes, lequel comprend en outre l'acquisition, dans un dispositif d'acquisition tel qu'une sonde ionique focalisée, d'une série d'images d'un matériau polycristallin pour des angles d'inclinaison différents entre la surface du matériau et un plan perpendiculaire à l'axe du faisceau de particules chargées, chaque image incluant des pixels représentant des intensités de points du matériau pour un angle d'inclinaison respectif.

12. Procédé selon l'une quelconque des revendications précédentes, lequel comprend en outre les étapes suivantes :
- calcul d'une image intermédiaire de contours pour chaque image de la série d'images, une première valeur étant assignée aux pixels de l'image de la série d'images pour lesquels pour obtenir une image de contour,
- superposition des images intermédiaires de contours pour former une image finale de contours.

13. Produit programme d'ordinateur comprenant des instructions de code de programmation destinées à exécuter les étapes du procédé selon l'une quelconque des revendications 1 à 11 lorsque ledit programme est exécuté sur un ordinateur.

## Patentansprüche

1. Verfahren zur Kartographie der kristallinen Ausrichtungen einer Probe (31) mit einer polierten Oberfläche, wobei das Verfahren umfasst:
- Empfangen (21) einer Bilderfolge (4a-4e) der Probe (31), die von einer Aufnahmevorrichtung (3) aufgenommen wurde, die geeignet ist, einen Strahl geladener Partikel auf die polierte Oberfläche zu emittieren, wobei die Bilder (4a-4e) für unterschiedliche Beleuchtungsgeometrien der Probe aufgenommen werden, wobei jedes Bild (4a-4e) Pixel enthält, die Punktintensitäten der Probe für eine jeweilige Beleuchtungsgeometrie darstellen,
- Schätzen (22) mindestens eines Intensitätsprofils für mindestens einen interessierenden Punkt des Materials ausgehend von der Bilderfolge, wobei jedes Intensitätsprofil die Intensität darstellt, die dem interessierenden Punkt in Abhängigkeit von der Beleuchtungsgeometrie zugeordnet ist, **dadurch gekennzeichnet, dass** das Verfahren auch Folgendes umfasst:
- Bestimmen (24) einer kristallinen Ausrichtung für jeden interessierenden Punkt des Materials durch Vergleichen (23) des dem interessierenden Punkt zugeordneten Intensitätsprofils mit theoretischen Signaturen von Intensitätsprofilen von bekannten kristallinen Ausrichtungen, welche in einer Datenbank enthalten sind.

2. Verfahren nach Anspruch 1, wobei der Schritt des Schätzens für jeden interessierenden Punkt des Materials das Gruppieren entsprechender Pixel, die den interessierenden Punkt in den Bildern der Bilderfolge darstellen, und das Generieren eines Graphen (50) umfasst, der die Intensität (51) des interessierenden Punktes in Abhängigkeit von der Beleuchtungsgeometrie darstellt.

3. Verfahren nach einem der Ansprüche 1 oder 2, wobei die Bilder der Bilderfolge aufgenommen werden:
- für einen konstanten Neigungswinkel (αₖₒₙₛₜₐₙₜ) zwischen der Normalen (33) zu der Oberfläche der Probe (31) und der Achse (32) des Strahls geladener Partikel, und
- für unterschiedliche Drehwinkel (β0-β4) um die Normale (33) zu der Oberfläche der Probe (31).

4. Verfahren nach Anspruch 3, welches zusätzlich einen Schritt des Geraderichtens der Bilder der Bilderfolge umfasst, wobei der Schritt des Geraderichtens darin besteht, die Bilder der für einen Drehwinkel ungleich Null erhaltenen Bilderfolge so zu drehen, dass sie mit einem Bild übereinstimmen, das für einen Neigungswinkel gleich Null erhalten wurde.

5. Verfahren nach einem der Ansprüche 3 oder 4, wobei der Drehwinkel (β0-β4) zwischen zwei aufeinander folgenden Bildern der Bilderfolge um einen Schritt zwischen 1° und 15° variiert.

6. Verfahren nach einem der Ansprüche 3 bis 5, wobei der Drehwinkel (β0-β4) über einen dynamischen Bereich von 180° oder mehr variiert, vorzugsweise von 270° oder mehr und noch mehr bevorzugt von 360°, wobei der dynamische Bereich der Differenz zwischen dem Drehwinkel eines Ausgangsbildes und dem Drehwinkel eines Endbildes der Bilderfolge entspricht.

7. Verfahren nach einem der Ansprüche 1 oder 2, wobei die Bilder der Bilderfolge für unterschiedliche Neigungswinkel (α0-α4) zwischen der Oberfläche der Probe(31) und einer Ebene (P) aufgenommen werden, die sich senkrecht zu der Achse (32) des von der Aufnahmevorrichtung (3) emittierten Strahls geladener Partikel erstreckt.

8. Verfahren nach Anspruch 7, wobei der Neigungswinkel jedes Bildes der Bilderfolge zwischen -60° und +60° liegt.

9. Verfahren nach einem der Ansprüche 7 oder 8, wobei der Neigungswinkel zwischen zwei aufeinander folgenden Bildern der Bilderfolge um einen Schritt zwischen 1° und 10° variiert.

10. Verfahren nach einem der Ansprüche 7 bis 9, welches zusätzlich einen Schritt des Verzerrens der Bilder der Bilderfolge umfasst, wobei der Schritt des Verzerrens darin besteht, die Bilder der für einen Neigungswinkel ungleich Null erhaltenen Bilderfolge so zu dehnen, dass sie mit einem Bild übereinstimmen, das für einen Neigungswinkel gleich Null erhalten wurde.

11. Verfahren nach einem der vorstehenden Ansprüche, welches zusätzlich die Aufnahme einer Bilderfolge eines polykristallinen Materials in einer Aufnahmevorrichtung, wie beispielsweise einer fokussierten Ionensonde, für unterschiedliche Neigungswinkel zwischen der Oberfläche des Materials und einer Ebene umfasst, die senkrecht zu der Achse des Strahls geladener Partikel steht, wobei jedes Bild Pixel enthält, die Punktintensitäten des Materials für einen entsprechenden Neigungswinkel darstellen.

12. Verfahren nach einem der vorstehenden Ansprüche, welches zusätzlich folgende Schritte umfasst:
- Berechnen eines Zwischenbildes von Konturen für jedes Bild der Bilderfolge, wobei den Pixeln des Bildes der Bilderfolge, für die ein Bild von Konturen erstellt werden soll, ein erster Wert zugewiesen wird,
- Überlagern der Zwischenbildern von Konturen zum Bilden eines endgültigen Bildes von Konturen.

13. Computerprogrammprodukt mit Programmcodebefehlen für die Ausführung der Schritte des Verfahrens nach einem der Ansprüche 1 bis 11, wenn dieses Programm auf einem Computer ausgeführt wird.

## Claims

1. A method for mapping the crystal orientations of a sample (31) having a polished surface, the method comprising:
- receiving (21) a series of image (4a-4e) of the sample (31), which images are acquired by an acquiring device (3) suitable for emitting a beam of charged particles onto the polished surface, the images (4a-4e) being acquired in different sample irradiation geometries, each image (4a-4e) including pixels representing the intensities of points of the sample in a respective irradiation geometry,
- estimating (22) at least one intensity profile for at least one given point of the material from the series of images, each intensity profile representing the intensity associated with the given point as a function of irradiation geometry, **characterized in that** the method further comprises:
- determining (24) a crystal orientation for each given point of the material by comparing (23) the intensity profile associated with said given point to theoretical signatures of intensity profiles of known crystal orientations, which signatures are contained in a database.

2. The method as claimed in claim 1, wherein the estimating step comprises, for each given point of the material, grouping homologous pixels representing said given point in the images of the series of images, and generating a plot (50) of the intensity (51) of the given point as a function of irradiation geometry.

3. The method as claimed in any one of claims 1 or 2, wherein the images of the series of images are acquired:
- at a constant angle of inclination (α_{constant}) between the normal (33) to the surface of the sample (31) and the axis (32) of the beam of charged particles, and
- at different angles of rotation (β0-β4) about the normal (33) to the surface of the sample (31).

4. The method as claimed in claim 3, which further comprises a step of rectifying images of the series of images, said rectifying step consisting in turning those images of the series of images which were obtained at a non-zero angle of rotation so as to make them correspond to an image obtained at a zero angle of inclination.

5. The method as claimed in one of claims 3 or 4, wherein the angle of rotation (β0-β4) between two successive images of the series of images varies by a step comprised between 1° and 15°.

6. The method as claimed in any one of claims 3 to 5, wherein the dynamic range of the angle of rotation (β0-β4) varies is greater than or equal to 180°, preferentially greater than or equal to 270° and even more preferentially equal to 360°, the dynamic range corresponding to the difference between the angle of rotation of an initial image and the angle of rotation of a final image of the series of images.

7. The method as claimed in any one of claims 1 or 2, wherein the images of the series of images are acquired at different angles of inclination (α0-α4) between the surface of the sample (31) and a plane (P) perpendicular to the axis (32) of the beam of charged particles emitted by the acquiring device (3) .

8. The method as claimed in claim 7, wherein the angle of inclination of each image of the series of images is comprised between -60° and +60°.

9. The method as claimed in any one of claims 7 or 8, wherein the angle of inclination between two successive images of the series of images varies by a step comprised between 1° and 10°.

10. The method as claimed in any one of claims 7 to 9, which further comprises a step of deforming images of the series of images, said deforming step consisting in stretching those images of the series of images which were obtained at a non-zero angle of inclination so as to make them correspond to an image obtained at a zero angle of inclination.

11. The method as claimed in any one of the preceding claims, which further comprises acquiring, in an acquiring device such as a focused ion beam probe, a series of images of a polycrystalline material at different angles of inclination between the surface of the material and a plane perpendicular to the axis of the beam of charged particles, each image including pixels representing intensities of points of the material at a respective angle of inclination.

12. The method as claimed in any one of the preceding claims, which further comprises the following steps:
- calculating an intermediate segmented image for each image of the series of images, wherein a first value is assigned to the pixels of the image of the series of images for which to obtain a segmented image,
- superimposing the intermediate segmented images to form a final segmented image.

13. A computer program product comprising programming code instructions intended to execute the steps of the method as claimed in any one of claims 1 to 11 when said program is executed on a computer.
